(19) Europäisches Patentamt
European Patent Office
Office européen des brevets

(11) **EP 4 542 507 A1**

(12) **EUROPEAN PATENT APPLICATION**

(43) Date of publication:
**23.04.2025 Bulletin 2025/17**

(21) Application number: **24206829.4**

(22) Date of filing: **16.10.2024**

(51) International Patent Classification (IPC):
**G06V 10/80** (2022.01)    **G06V 10/82** (2022.01)
**G06V 20/56** (2022.01)    **G06V 20/64** (2022.01)

(52) Cooperative Patent Classification (CPC):
**G06V 20/647; G06V 10/806; G06V 10/82; G06V 20/56**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.10.2023  CN 202311370231**

(71) Applicant: **Beijing Horizon Information Technology Co., Ltd.**
**Beijing 100094 (CN)**

(72) Inventor: **WANG, Xinjie**
**Beijing, 100094 (CN)**

(74) Representative: **v. Bezold & Partner Patentanwälte - PartG mbB**
**Ridlerstraße 57**
**80339 München (DE)**

(54) **THREE-DIMENSIONAL VISUAL PERCEPTION (MODEL TRAINING) METHOD, APPARATUS, MEDIUM AND DEVICE**

(57)    Disclosed are a three-dimensional visual perception method, a model training method and apparatus, a medium, and a device. The three-dimensional visual perception method includes: obtaining an image captured by a camera mounted on a movable device; determining, based on a camera parameter corresponding to the image, position information respectively corresponding to at least partial pixels in the image within a camera coordinate system; generating a position encoding feature map based on the position information respectively corresponding to the at least partial pixels; generating a fusion feature map based on the image and the position encoding feature map; and generating, based on the fusion feature map, a three-dimensional visual perception result corresponding to the image by using a three-dimensional visual perception model. Ac- cording to the embodiments of this disclosure, accuracy and reliability of the three-dimensional visual perception result are well ensured.

Obtain an image captured by a camera disposedmounted on a removablemovable device — 110

Determine, based on a camera parameter corresponding to the image, position information respectively corresponding to at least someat least partial pixels in the image within a camera coordinate system — 120

Generate a position encoding feature map based on the position information respectively corresponding to the at least someat least partial pixels — 130

Generate a fusion feature map based on the image and the position encoding feature map — 140

Generate, based on the fusion feature map, a three-dimensional visual perception result corresponding to the image by using a three-dimensional visual perception model — 150

FIG.1

EP 4 542 507 A1

# Description

## FIELD OF THE INVENTION

This disclosure relates to driving technologies, and in particular, to a three-dimensional visual perception method, a model training method and apparatus, a medium, and a device.

## BACKGROUND OF THE INVENTION

Application of autonomous driving technologies on movable devices, such as vehicles, becomes increasingly widespread. During use of the autonomous driving technologies, three-dimensional visual perception tasks (such as 3D object detection tasks) may be performed. The three-dimensional visual perception task generally needs to be performed by a specific neural network model.

## SUMMARY OF THE INVENTION

Currently, due to poor generalization of a neural network model for performing a three-dimensional visual perception task, it is difficult to ensure accuracy and reliability of a three-dimensional visual perception result.

To resolve the foregoing technical problem, this disclosure provides a three-dimensional visual perception method, a model training method and apparatus, a medium, and an electronic device, to ensure the accuracy and the reliability of the three-dimensional visual perception result.

According to an aspect of this disclosure, a three-dimensional visual perception method is provided, including:

obtaining an image captured by a camera mounted on a movable device;
determining, based on a camera parameter corresponding to the image, position information respectively corresponding to at least partial pixels in the image within a camera coordinate system;
generating a position encoding feature map based on the position information respectively corresponding to the at least partial pixels;
generating a fusion feature map based on the image and the position encoding feature map; and
generating, based on the fusion feature map, a three-dimensional visual perception result corresponding to the image by using a three-dimensional visual perception model.

According to another aspect of this disclosure, a training method for a three-dimensional visual perception model is provided, including:

obtaining a training image including environmental information surrounding a movable device;

determining, based on a camera parameter corresponding to the training image, training position information respectively corresponding to at least partial training pixels in the training image within a camera coordinate system;
generating a training position encoding feature map based on the training position information respectively corresponding to the at least partial training pixels;
generating a training fusion feature map based on the training image and the training position encoding feature map;
generating, based on the training fusion feature map, a training three-dimensional visual perception result corresponding to the training image by using a to-be-trained three-dimensional visual perception model;
performing information annotation on the training image to obtain annotated data associated with a three-dimensional visual perception task;
training the to-be-trained three-dimensional visual perception model by using an error between the training three-dimensional visual perception result and the annotated data; and
determining the trained to-be-trained three-dimensional visual perception model as a three-dimensional visual perception model in response to that the trained to-be-trained three-dimensional visual perception model meets a preset training termination condition.

According to still another aspect of this disclosure, a three-dimensional visual perception apparatus is provided, including:

a first obtaining module, configured to obtain an image captured by a camera mounted on a movable device;
a first determining module, configured to determine, based on a camera parameter corresponding to the image obtained by the first obtaining module, position information respectively corresponding to at least partial pixels in the image obtained by the first obtaining module within a camera coordinate system;
a first generation module, configured to generate a position encoding feature map based on the position information respectively corresponding to the at least partial pixels that is determined by the first determining module;
a second generation module, configured to generate a fusion feature map based on the image obtained by the first obtaining module and the position encoding feature map generated by the first generation module; and
a third generation module, configured to generate, based on the fusion feature map generated by the second generation module, a three-dimensional visual perception result corresponding to the image obtained by the first obtaining module by using a three-dimensional visual perception model.

According to yet another aspect of this disclosure, a training apparatus for a three-dimensional visual perception model is provided, including:

a second obtaining module, configured to obtain a training image including environmental information surrounding a movable device;
a second determining module, configured to determine, based on a camera parameter corresponding to the training image obtained by the second obtaining module, training position information respectively corresponding to at least partial training pixels in the training image within a camera coordinate system;
a fourth generation module, configured to generate a training position encoding feature map based on the training position information respectively corresponding to the at least partial training pixels that is determined by the second determining module;
a fifth generation module, configured to generate a training fusion feature map based on the training image obtained by the second obtaining module and the training position encoding feature map generated by the fourth generation module;
a sixth generation module, configured to generate, based on the training fusion feature map generated by the fifth generation module, a training three-dimensional visual perception result corresponding to the training image obtained by the second obtaining module by using a to-be-trained three-dimensional visual perception model;
an information annotation module, configured to perform information annotation on the training image obtained by the second obtaining module, to obtain annotated data associated with a three-dimensional visual perception task;
a training module, configured to train the to-be-trained three-dimensional visual perception model by using an error between the training three-dimensional visual perception result generated by the sixth generation module and the annotated data obtained by the information annotation module; and
a third determining module, configured to determine the to-be-trained three-dimensional visual perception model trained by the training module as a three-dimensional visual perception model in response to that the to-be-trained three-dimensional visual perception model trained by the training module meets a preset training termination condition.

According to a further aspect of an embodiment of this disclosure, a computer readable storage medium is provided, wherein the storage medium stores a computer program, and the computer program is used for implementing the three-dimensional visual perception method or the training method for a three-dimensional visual perception model described above.

According to a still further aspect of an embodiment of this disclosure, an electronic device is provided, where the electronic device includes:

a processor; and
a memory, configured to store a processor-executable instruction, wherein
the processor is configured to read the executable instruction from the memory, and execute the instruction to implement the three-dimensional visual perception method or the training method for a three-dimensional visual perception model described above.

According to a yet further aspect of an embodiment of this disclosure, a computer program product is provided. When instructions in the computer program product are executed by a processor, the three-dimensional visual perception method or the training method for a three-dimensional visual perception model described above is implemented.

Based on the three-dimensional visual perception method, the model training method and apparatus, the medium, the device, and the product that are provided in the foregoing embodiments of this disclosure, the image captured by the camera mounted on the movable device may be obtained; the position information respectively corresponding to the at least partial pixels in the image within the camera coordinate system may be determined based on the camera parameter corresponding to the image; and the position encoding feature map may be generated based on the position information respectively corresponding to the at least partial pixels. Obviously, generation of the position encoding feature map utilizes the camera parameter corresponding to the image. The position encoding feature map may carry camera parameter information, and correspondingly, the fusion feature map generated based on the image and the position encoding feature map may also carry the camera parameter information. The three-dimensional visual perception result corresponding to the image may be generated based on the fusion feature map by using the three-dimensional visual perception model. In this way, it may be considered that when performing the three-dimensional visual perception task for the image captured by the camera, the camera parameter information of the camera is introduced into a calculation process of the three-dimensional visual perception model. In this case, the three-dimensional visual perception result generated by the three-dimensional visual perception model may be adapted to the camera parameter of the camera as possible. Therefore, although the training for the three-dimensional visual perception model is based on an image captured by another camera with significant differences in camera parameters from this camera, accuracy and reliability of the three-dimensional visual perception result can also be well ensured.

## BRIEF DESCRIPTION OF THE DRAWINGS

FIG. 1 is a schematic flowchart of a three-dimensional visual perception method according to some exemplary embodiments of this disclosure;

FIG. 2 is a schematic flowchart of a manner for determining position information respectively corresponding to at least partial pixels in an image within a camera coordinate system according to some exemplary embodiments of this disclosure;

FIG. 3 is a schematic flowchart of a manner for determining target depth values respectively corresponding to at least partial pixels in an image according to some exemplary embodiments of this disclosure;

FIG. 4 is a conceptual diagram of a manner for determining target depth values respectively corresponding to at least partial pixels in an image according to some exemplary embodiments of this disclosure;

FIG. 5 is a schematic flowchart of a manner for generating a fusion feature map according to some exemplary embodiments of this disclosure;

FIG. 6 is a schematic structural diagram of a three-dimensional visual perception model according to some exemplary embodiments of this disclosure;

FIG. 7 is a schematic flowchart of a manner for fusing a first intermediate feature map and a position encoding feature map according to still some other exemplary embodiments of this disclosure;

FIG. 8 is a schematic flowchart of manner for obtaining a three-dimensional visual perception result according to some exemplary embodiments of this disclosure;

FIG. 9 is a schematic flowchart of a manner for determining position information respectively corresponding to at least partial pixels in an image within a camera coordinate system according to some other exemplary embodiments of this disclosure;

FIG. 10-1 is a schematic diagram of a sampling result according to some exemplary embodiments of this disclosure;

FIG. 10-2 is a schematic diagram of a sampling result according to some other exemplary embodiments of this disclosure;

FIG. 11-1 is a schematic diagram of a grayscale map corresponding to a depth map according to some exemplary embodiments of this disclosure;

FIG. 11-2 is a schematic diagram of a grayscale map corresponding to a depth map according to some other exemplary embodiments of this disclosure;

FIG. 12-1 is a schematic diagram of grayscale maps respectively corresponding to three channels in a position encoding feature map according to some exemplary embodiments of this disclosure;

FIG. 12-2 is a schematic diagram of grayscale maps respectively corresponding to three channels in a third intermediate feature map according to some exemplary embodiments of this disclosure;

FIG. 13 is a schematic flowchart of a training method for a three-dimensional visual perception model according to some exemplary embodiments of this disclosure;

FIG. 14 is a schematic structural diagram of a three-dimensional visual perception apparatus according to some exemplary embodiments of this disclosure;

FIG. 15-1 is a schematic structural diagram of a first determining module according to some exemplary embodiments of this disclosure;

FIG. 15-2 is a schematic structural diagram of a second generation module and a third generation module according to some exemplary embodiments of this disclosure;

FIG. 16 is a schematic structural diagram of a training apparatus for a three-dimensional visual perception model according to some exemplary embodiments of this disclosure; and

FIG. 17 is a diagram of a structure of an electronic device according to some exemplary embodiment of this disclosure.

## DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments. In the present disclosure, the singular forms are intended to include the plural forms as well, unless the context clearly indicates otherwise.

Application overview

During use of an autonomous driving technology, visual perception tasks may be performed. The visual perception tasks may be classified into two-dimensional visual perception tasks and three-dimensional visual perception tasks. The two-dimensional visual perception tasks may include, but are not limited to 2D object detection tasks and 2D object tracking tasks. The three-dimensional visual perception tasks may include, but are not limited to 3D object detection tasks and 3D object tracking tasks.

Different from a neural network model used for performing the two-dimensional visual perception task, a neural network model used for performing the three-dimensional visual perception task learns a relationship between an image and output in a specific three-dimensional coordinate system (such as a camera coordinate system). In this way, camera parameters may be explicitly coupled, resulting in problems of poor model generalization and mixed training dropout. For example, the neural network model used for performing the 3D object detection task is trained based on an image captured by a camera A. If a camera parameter of a camera B is significantly different from that of the camera A, it is difficult to apply this neural network model to 3D object detection for an image captured by the camera B. If the neural network model is used for 3D object detection on the image captured by the camera B, accuracy and reliability of an obtained 3D object detection result are extremely low.

Therefore, how to ensure accuracy and reliability of a three-dimensional visual perception result when the three-dimensional visual perception task is performed by using the neural network model is an issue worthy of attention for a person skilled in the art.

Exemplary system

Embodiments of this disclosure may be divided into two stages, which respectively are a training stage and an inference stage. At the training stage, a large amount of sample data may be utilized for model training, so as to obtain a three-dimensional visual perception model. At the inference stage, a three-dimensional visual perception model may be used to perform the three-dimensional visual perception task, so as to obtain a three-dimensional visual perception result.

It should be noted that the three-dimensional visual perception model may include a feature extraction network and a prediction network. The feature extraction network may be used to perform feature extraction on an image captured by a camera mounted on a movable device. The prediction network may be used to make predictions based on a feature extraction result generated by the feature extraction network, so as to obtain a three-dimensional visual perception result. In the embodiments of this disclosure, camera parameter information corresponding to the camera mounted on the movable device may be introduced into a calculation process of the three-dimensional visual perception model, thereby ensuring accuracy and reliability of the three-dimensional visual perception result.

Exemplary method

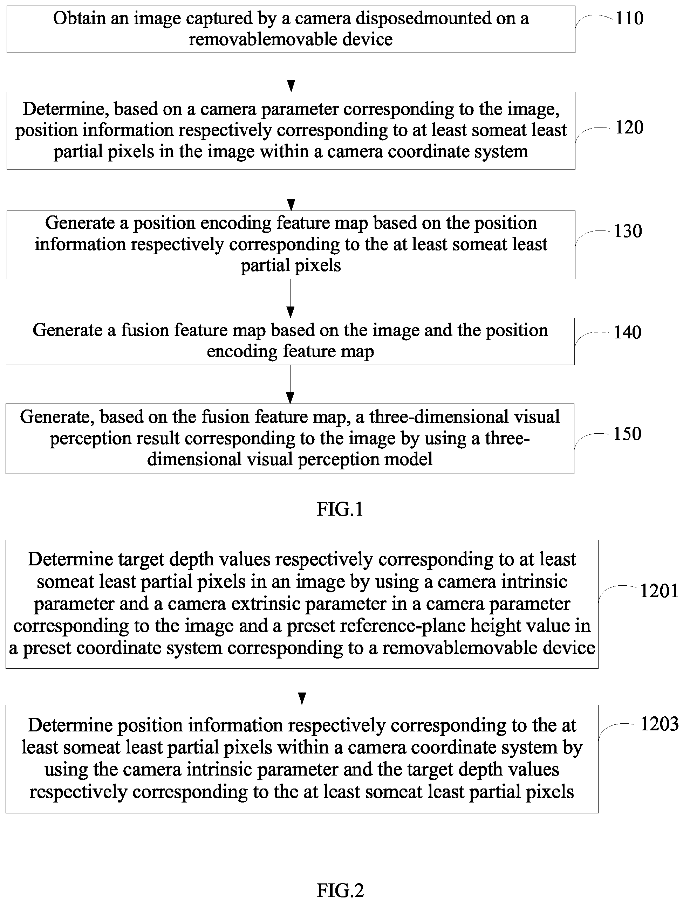

FIG. 1 is a schematic flowchart of a three-dimensional visual perception method according to some exemplary embodiments of this disclosure. The method shown in FIG. 1 may be implemented at an inference stage. The method shown in FIG. 1 may include steps 110, 120, 130, 140, and 150.

Step 110. Obtain an image captured by a camera mounted on a movable device.

Optionally, the movable device may include, but is not limited to a vehicle, an aircraft, and a train.

Optionally, the camera mounted on the movable device may image according to the principle of pinhole imaging. The camera may be mounted at left front, right ahead, or right front of the movable device. Certainly, the camera may also be mounted at rear left, right behind, or rear right of the movable device.

In step 110, the camera may be called to perform real-time image acquisition to obtain a corresponding image. Alternatively, historical images may be captured by the camera from an image library. If it is assumed that a width and a height of the image obtained in step 110 are respectively represented by using H1 and W1, there are a total of H1*W1 pixels in the image obtained in step 110.

Step 120. Determine, based on a camera parameter corresponding to the image, position information respectively corresponding to at least partial pixels in the image within a camera coordinate system.

It should be noted that the camera parameter corresponding to the image may refer to a corresponding camera parameter when the image is captured by the camera. The camera parameter corresponding to the image may include a camera intrinsic parameter and a camera extrinsic parameter. The camera intrinsic parameter usually refers to a parameter related to characteristics of the camera, including but not limited to a focal length, a field angle of view, resolution, and a distortion coefficient of the camera. The camera intrinsic parameter may be represented by using K. The camera extrinsic parameter usually refers to a parameter of the camera in a reference coordinate system (such as a preset coordinate system corresponding to the movable device herein after), including but not limited to translation and rotation of the camera in the reference coordinate system. The translation in the camera extrinsic parameter may be represented by using T. The rotation in the camera extrinsic parameter may be represented by using R. The rotation in the camera extrinsic parameter may be characterized by using a yaw angle, a pitch angle, and a roll angle; or may be characterized by using a pitch angle and a roll angle. The entire extrinsic camera parameter may be represented by using R|T.

Optionally, the camera parameter corresponding to the image may be calculated by using algorithms such as visual inertial odometry (VIO) and simultaneous localization and mapping (SLAM).

Optionally, referring to the camera parameter corresponding to the camera, each pixel in the H1*W1 pixels in the image may be projected to the camera coordinate system, and a spatial coordinate of a projection point within the camera coordinate system may be used as the position information corresponding to the pixel within the camera coordinate system. In some embodiments, it is also possible to first filter some pixels from the H1*W1 pixels according to a certain rule, and then determine corresponding position information within the camera coordinate system for each pixel in the filtered some pixels.

For ease of understanding, in the embodiments of this disclosure, a case where position information respectively corresponding to N pixels (N may be equal to or less than H1*W1) is determined in step 120 is taken as an example for description.

Step 130. Generate a position encoding feature map based on the position information respectively corresponding to the at least partial pixels.

In step 130, a position encoding feature map that carries the position information respectively corresponding to the N pixels may be generated. The position encoding feature map may be represented as position encoding map.

Step 140. Generate a fusion feature map based on the image and the position encoding feature map.

In step 140, the image and the position encoding feature map may be fused by using a certain fusion algorithm, to obtain the fusion feature map.

Step 150. Generate, based on the fusion feature map, a three-dimensional visual perception result corresponding to the image by using a three-dimensional visual perception model.

It should be noted that the three-dimensional visual perception model may be a model that has been trained at a training stage and is used for performing a three-dimensional visual perception task.

If it is assumed that the three-dimensional visual perception task is a 3D object detection task, the three-dimensional visual perception result obtained by using the three-dimensional visual perception model may be a 3D object detection result, which may include spatial coordinates, heading angles, lengths, widths, and heights of several objects in the image.

If it is assumed that the three-dimensional visual perception task is a 3D object tracking task, there may be at least two frames of images, and the three-dimensional visual perception result obtained by using the three-dimensional visual perception model may be a 3D object tracking result, which may not only include spatial coordinates, heading angles, lengths, widths, and heights of several objects in each frame of the image, but may also indicate which objects appearing in different image frames correspond to same targets in a real physical world.

In the embodiments of this disclosure, the image captured by the camera mounted on the movable device may be obtained; the position information respectively corresponding to the at least partial pixels in the image within the camera coordinate system may be determined based on the camera parameter corresponding to the image; and the position encoding feature map may be generated based on the position information respectively corresponding to the at least partial pixels. Obviously, generation of the position encoding feature map utilizes the camera parameter corresponding to the image. The position encoding feature map may carry camera parameter information, and correspondingly, the fusion feature map generated based on the image and the position encoding feature map may also carry the camera parameter information. The three-dimensional visual perception result corresponding to the image may be generated based on the fusion feature map by using the three-dimensional visual perception model. In this way, it may be considered that when performing the three-dimensional visual perception task for the image captured by the camera, the camera parameter information of the camera is introduced into a calculation process of the three-dimensional visual perception model. In this case, the three-dimensional visual perception result generated by the three-dimensional visual perception model may be adapted to the camera parameter of the camera as possible. Therefore, although the training for the three-dimensional visual perception model is based on an image captured by another camera with significant differences in camera parameters from this camera, accuracy and reliability of the three-dimensional visual perception result can also be well ensured.

In some optional examples, as shown in FIG. 2, step 120 may include steps 1201 and 1203.

Step 1201. Determine target depth values respectively corresponding to the at least partial pixels in the image by using a camera intrinsic parameter and a camera extrinsic parameter in the camera parameter corresponding to the image and a preset reference-plane height value in a preset coordinate system corresponding to the movable device.

Optionally, the movable device may be a vehicle, and the preset coordinate system corresponding to the movable device may be a vehicle coordinate system (VCS).

In some optional implementations of this disclosure, the preset reference-plane height value may include a preset sky-plane height value and a preset ground-plane height value. The preset sky-plane height value may be a larger positive value, such as 100, 200, or 500. The preset ground-plane height value may be 0 or a value close to 0.

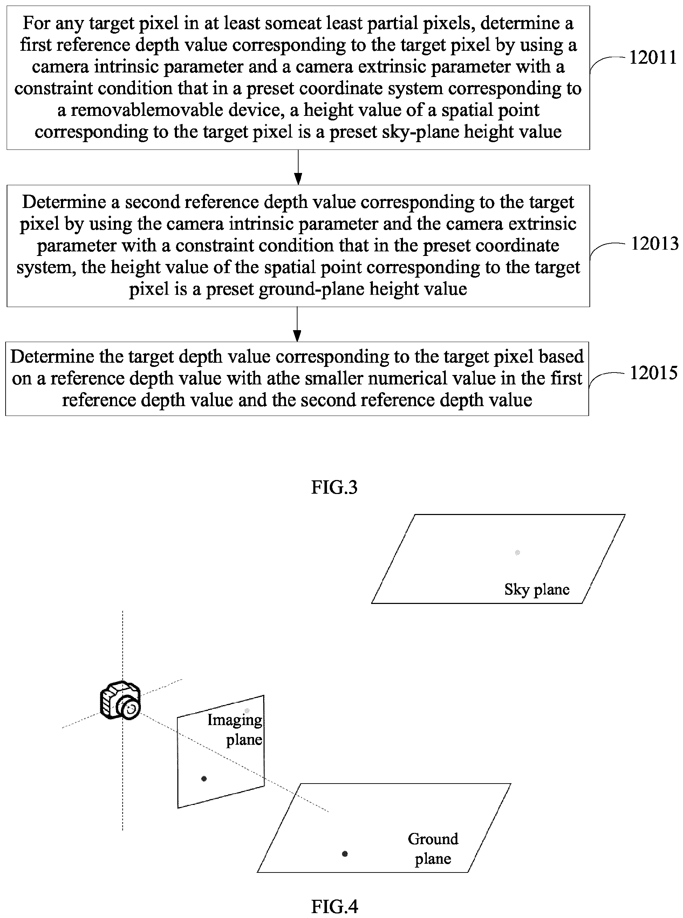

As shown in FIG. 3, step 1201 may include steps 12011, 12013, and 12015.

Step 12011. For any target pixel in the at least partial pixels, determine a first reference depth value corresponding to the target pixel by using the camera intrinsic parameter and the camera extrinsic parameter with a constraint condition that in the preset coordinate system corresponding to the movable device, a height value of a spatial point corresponding to the target pixel is the preset sky-plane height value.

It may be understood that when using the principle of pinhole imaging, a projection relationship between coordinate systems may be expressed as the following first homogeneous equation or second homogeneous equation.

The first homogeneous equation is:

$$\begin{bmatrix} u \\ v \\ 1 \end{bmatrix} = \frac{1}{z_c} K \begin{bmatrix} R & T \\ 0 & 1 \end{bmatrix} \begin{bmatrix} X \\ Y \\ Z \\ 1 \end{bmatrix}$$

The second homogeneous equation is:

$$\begin{bmatrix} X \\ Y \\ Z \\ 1 \end{bmatrix} = z_c \begin{bmatrix} R & T \\ 0 & 1 \end{bmatrix}^{-1} K^{-1} \begin{bmatrix} u \\ v \\ 1 \end{bmatrix}$$

u and v represent a horizontal coordinate and a vertical coordinate of the pixel in a pixel coordinate system, respectively; $z_c$ represents a depth value of the pixel in the corresponding camera coordinate system; K represents the camera intrinsic parameter; R and T represent rotation and translation in the camera extrinsic parameter, respectively; and X, Y, and Z represent coordinate values of the spatial point along an x-axis, a Y-axis, and a Z-axis in the VCS coordinate system, respectively.

Optionally, R may be a matrix with a shape of 3*3, and T may be a matrix with a shape of 3*1.

It should be noted that the first homogeneous equation is an equation used to project the spatial point in the VCS coordinate system to the pixel coordinate system, and the second homogeneous equation is an equation used to project the pixel in the pixel coordinate system to the VCS coordinate system.

As described above, K, R, and T may be calculated by using algorithms such as VIO and SLAM, and values thereof may be considered known. In addition, the horizontal coordinate and the vertical coordinate of the target pixel in the pixel coordinate system may be considered known. In other words, values of u and v are also known. In this case, in step 12011, these known values may all be introduced into the second homogeneous equation, and Z in the second homogeneous equation is made be equal to the preset sky-plane height value. By solving the second homogeneous equation, the value of $z_c$ may be obtained, which may be used as the first reference depth value corresponding to the target pixel.

Step 12013. Determine a second reference depth value corresponding to the target pixel by using the camera intrinsic parameter and the camera extrinsic parameter with a constraint condition that in the preset coordinate system, the height value of the spatial point corresponding to the target pixel is the preset ground-plane height value.

In step 12013, values of K, R, T, u, and v may all be introduced into the second homogeneous equation, and Z in the second homogeneous equation is made be equal to the preset ground-plane height value. By solving the second homogeneous equation, the value of $z_c$ may be obtained, which may be used as the second reference depth value corresponding to the target pixel.

Step 12015. Determine the target depth value corresponding to the target pixel based on the smaller in the first reference depth value and the second reference depth value.

In step 12015, the first reference depth value and the second reference depth value may be compared in magnitude to filter out the reference depth value with the smaller numerical value, and then, the reference depth value with the smaller numerical value may be directly used as the target depth value corresponding to the target pixel.

Certainly, the implementation of step 12015 is not limited hereto. For example, at the training stage, a large amount of sample data may be utilized for model training, so as to obtain a depth prediction model. At the inference stage, the depth prediction model may be used to determine a predicted depth value of the target pixel. After the first reference depth value and the second reference depth value are compared in magnitude to filter out the reference depth value with the smaller numerical value, averaging or weighted averaging may be performed on the reference depth value with the smaller numerical value and the predicted depth value, and an obtained average or weighted average may be used as the target depth value corresponding to the target pixel.

In this embodiment, as shown in FIG. 4, it may be assumed that there are open sky and ground planes in the preset coordinate system, each of which may be regarded as a reference plane. For any target pixel on an imaging plane, it may be sequentially assumed that a corresponding spatial point in the preset coordinate system falls on the sky plane and the ground plane. Solving the second homogeneous equation based on these assumptions can efficiently and reliably obtain two reference depth values. This may provide effective reference for determining the target depth value, thereby ensuring accuracy and reliability of the determined target depth value.

Certainly, step 1201 is not limited to the implementation shown in FIG. 3. For example, in the preset coordinate system, if there may be a specific building whose height value is standardized, a plane where a top surface of the specific building is located may also be used as a reference plane, and the height value of the specific building may be applied to determine the target depth value.

Step 1203. Determine the position information respectively corresponding to the at least partial pixels within the camera coordinate system by using the camera intrinsic parameter and the target depth values respectively corresponding to the at least partial pixels.

It is assumed that a coordinate of the target pixel is (u, v), the camera intrinsic parameter include $u_0$, $v_0$, fx, and fy ($u_0$ and $v_0$ represent a center of the image, and fx and fy represent a normalized focal length), and the target depth value of the target pixel is represented by using d. In this case, u, v, $u_0$, $v_0$, fx, and fy may be used to project the target pixel to the camera coordinate system, so as to obtain a coordinate (x, y, z) of a projection point. For details, reference may be made to the following formulas:

$$x = \frac{u - u0}{fx} * d$$

$$y = \frac{v - v0}{fy} * d$$

$$z = d$$

The coordinate (x, y, z) of the projection point may be used as the position information corresponding to the target pixel. In a similar way, the position information corresponding to at least partial pixels may be obtained.

In the embodiments of this disclosure, the target depth values of at least partial pixels in the image can be efficiently and reasonably determined with reference to the camera intrinsic parameter, the camera extrinsic parameter, and the preset reference-plane height value and in combination with the projection relationship between the coordinate systems. The target depth value may be used together with the camera intrinsic parameter to determine the position information, thus providing effective reference for the determining of the position information, thereby ensuring accuracy and reliability of the determined position information.

In some examples, the position information corresponding to any target pixel in the at least partial pixels includes: a first coordinate value along an x-axis of the camera coordinate system, a second coordinate value along a y-axis of the camera coordinate system, and a third coordinate value along a z-axis of the camera coordinate system; and the first coordinate value, the second coordinate value, and the third coordinate value corresponding to the target pixel are stored at corresponding positions of different channels in the position encoding feature map.

As described above, the position information corresponding to the target pixel may be represented by using (x, y, z), wherein x represents the first coordinate value along the x-axis of the camera coordinate system, y represents the second coordinate value along the y-axis of the camera coordinate system, and z represents the third coordinate value along the z-axis of the camera coordinate system.

In the embodiments of this disclosure, after the position information respectively corresponding to the N pixels in the image is determined, a position encoding feature map with N pixels and 3 channels may be generated. The N pixels in the position encoding feature map may be in one-to-one correspondence to the N pixels in the image. A feature value of a pixel in the position encoding feature map that corresponds to the target pixel may be composed of x, y, and z, wherein x is stored in a first channel of the position encoding feature map, y is stored in a second channel of the position encoding feature map, and z is stored in a third channel of the position encoding feature map. In this way, based on the position information respectively corresponding to the N pixels, a position encoding feature map representing intrinsic and extrinsic parameter information of the camera at a pixel level may be efficiently and reliably obtained.

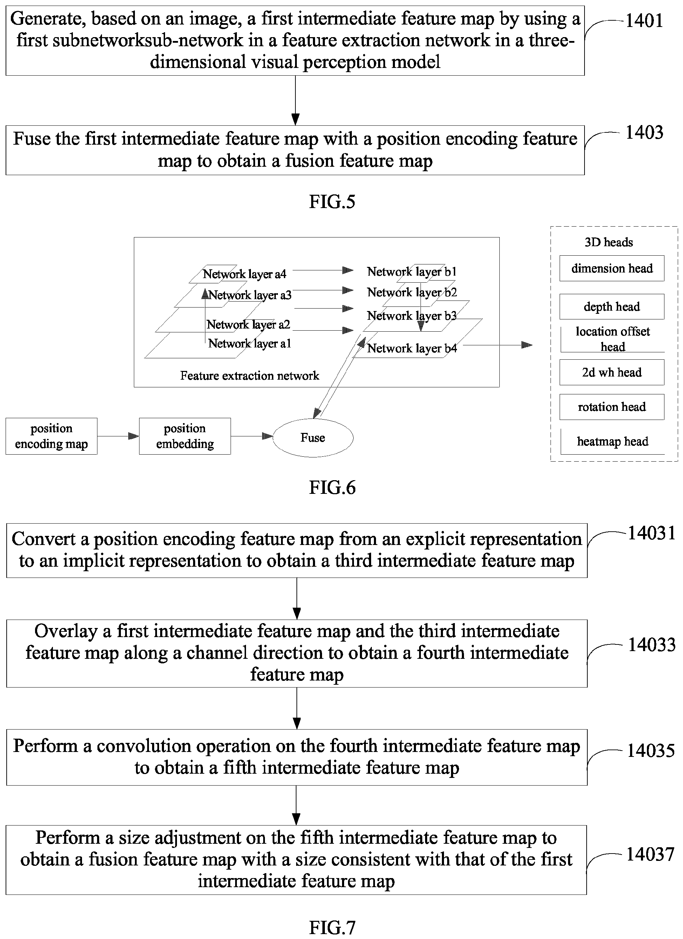

In some optional examples, as shown in FIG. 5, step 140 includes steps 1401 and 1403.

Step 1401. Generate, based on the image, a first intermediate feature map by using a first sub-network in a feature extraction network in the three-dimensional visual perception model.

Optionally, the feature extraction network in the three-dimensional visual perception model may be a feature pyramid network (FPN). Certainly, the feature extraction network is not limited hereto, and may also be other types of feature extractors. This is not limited in this disclosure.

In an optional example, for a structure of the feature extraction network, reference may be made to FIG. 6. It may be learned from FIG. 6 that the feature extraction network may include a bottom-up part and a top-down part. The bottom-up part may include a network layer a1, a network layer a2, a network layer a3, and a network layer a4. The top-down part may include a network layer b1, a network layer b2, a network layer b3, and a network layer b4.

Optionally, the first sub-network in the feature extraction network may include the network layers a1 to a4, and the network layers b1 to b3. The first sub-network may perform downsampling four times and perform upsampling three times on the image, to obtain the first intermediate feature map. In this way, a width and a height of the first intermediate feature map may be 1/2 of the width and the height of the image, respectively.

Alternatively, the first sub-network in the feature extraction network may include the network layers a1 to a4 and the network layers b1 and b2. The first sub-network may perform downsampling four times and perform upsampling twice on the image, to obtain the first intermediate feature map. In this way, a width and a height of the first intermediate feature map may be 1/4 of the width and the height of the image, respectively.

Certainly, the composition of the first sub-network is not limited hereto. For example, the first sub-network may include the network layers a1 to a4 and the network layer b1. The specific composition of the first sub-network may be set according to an actual situation, which is not limited in this disclosure.

It should be noted that the first sub-network may only include some network layers in the feature extraction network, and the remaining network layers in the feature extraction network may form a second sub-network, which may be used to generate a second intermediate feature map described below.

Step 1403. Fuse the first intermediate feature map with the position encoding feature map to obtain the fusion feature map.

In some optional implementations of this disclosure, as shown in FIG. 7, step 1403 includes steps 14031, 14033, 14035, and 14037.

Step 14031. Convert the position encoding feature map from an explicit representation to an implicit representation to obtain a third intermediate feature map.

In step 14031, convolution operation may be performed on the position encoding feature map to convert a feature in the position encoding feature map from an explicit feature into an implicit feature through linear transformation, so as to obtain the third intermediate feature map. The third intermediate feature map may be represented by using position embedding. A scale of the third intermediate feature map may be consistent with that of the position encoding feature map. To be specific, a width, a height, and a quantity of channels of the third intermediate feature map may be consistent with those of the position encoding feature map, respectively.

Step 14033. Overlay the first intermediate feature map and the third intermediate feature map along a channel direction to obtain a fourth intermediate feature map.

If the width and the height of the first intermediate feature map are consistent with those of the third intermediate feature map, for example, both the first intermediate feature map and the third intermediate feature map have a width of W2 and a height of H2, the first intermediate feature map and the third intermediate feature map may be directly overlaid along the channel direction to obtain the fourth intermediate feature map. A width of the fourth intermediate feature map is W2, a height is H2, and a quantity of channels is a sum of quantities of channels of the first intermediate feature map and the third intermediate feature map.

If the width and the height of the first intermediate feature map are inconsistent with those of the third intermediate feature map, for example, the width of the first intermediate feature map is W2 and the height is H2, the width of the third intermediate feature map is W3 that is different from W2, and the height is H3 that is different from H2, the width of the third intermediate feature map may be first adjusted from W3 to W2 and the height may be adjusted from H3 to H2, and then the first intermediate feature map is overlaid with the third intermediate feature map on which size adjustment is performed along the channel direction, to obtain the fourth intermediate feature map. Certainly, size adjustment may also be performed on the first intermediate feature map, and then the first intermediate feature map on which the size adjustment is performed is overlaid with the third intermediate feature map along the channel direction to obtain the fourth intermediate feature map.

Step 14035. Perform a convolution operation on the fourth intermediate feature map to obtain a fifth intermediate feature map.

In step 14035, by performing the convolution operation on the fourth intermediate feature map, information exchange between different channels in the fourth intermediate feature map may be achieved to effectively achieve fusion of information carried by the first intermediate feature map and the third intermediate feature map both, so as to obtain the fifth intermediate feature map.

Step 14037. Perform a size adjustment on the fifth intermediate feature map to obtain the fusion feature map with a size consistent with that of the first intermediate feature map.

In step 14037, a width and a height of the fifth intermediate feature map may be adjusted through upsampling and downsampling, and/or a quantity of channels in the fifth intermediate feature map may be adjusted through a convolution operation, to obtain the fusion feature map with a width, a height, and a quantity of channels consistent with those of the first intermediate feature map.

In the implementation shown in FIG. 7, the fusion of the first intermediate feature map and the position encoding feature map can be effectively achieved through the conversion of the representation form of the feature map, the overlaying of feature maps, the convolution operation, the size adjustment for the feature map, and execution of other operations, so that the fusion feature map carries the camera parameter information.

Certainly, step 1403 is not limited to the implementation shown in FIG. 7. For example, in the process of fusing the first intermediate feature map and the position encoding feature map, feature concatenation, element-by-element operation, and other operational logic may also be introduced.

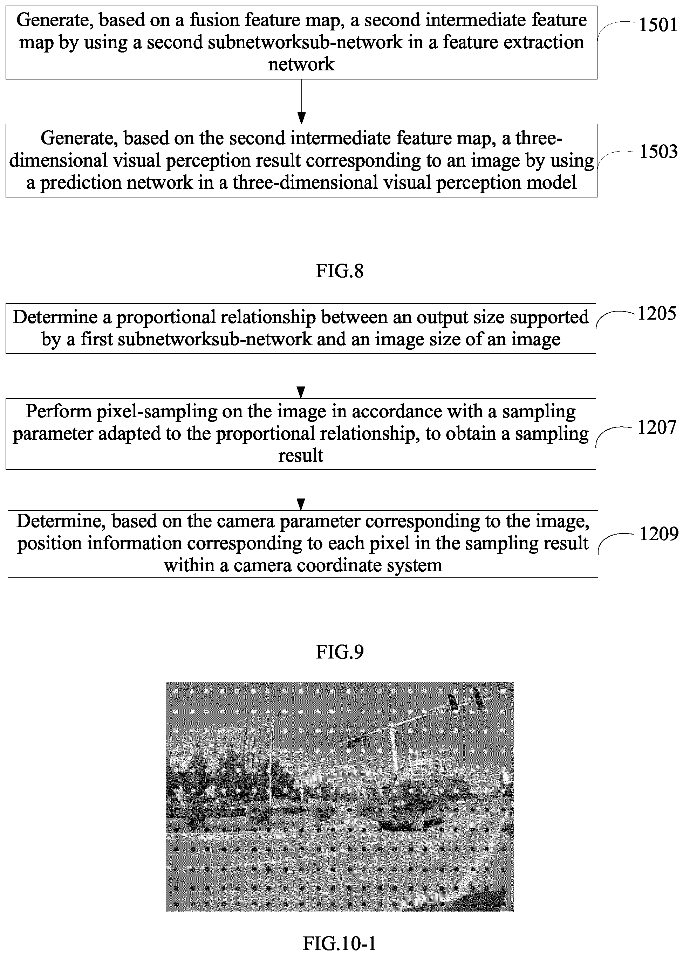

As shown in FIG. 8, step 150 includes steps 1501 and 1503.

Step 1501. Generate, based on the fusion feature map, a second intermediate feature map by using a second sub-network in the feature extraction network.

If it is assumed that the first sub-network includes the network layers a1 to a4 and the network layers b1 to b3 in FIG. 6, the second sub-network may include the network layer b4, which may perform upsampling on the fusion feature map to generate the second intermediate feature map.

If it is assumed that the first sub-network includes the network layers a1 to a4 and the network layers b1 and b2 in FIG. 6, the second sub-network may include the network layers b3 and b4. The network layer b3 may perform upsampling on the fusion feature map, and the network layer b4 may perform upsampling on an upsampling result generated by the network layer b3, so as to generate the second intermediate feature map.

Step 1503. Generate, based on the second intermediate feature map, the three-dimensional visual perception result corresponding to the image by using a prediction network in the three-dimensional visual perception model.

Optionally, the prediction network in the three-dimensional visual perception model may also be referred to as 3D heads. For composition of the 3D heads, reference may be made to FIG. 6. For example, the 3D heads may include a sub-network (dimension head) for size prediction, a sub-network (depth head) for predicting a depth value, a sub-network (location offset head) for predicting a position offset, a sub-network (rotation head) for predicting a heading angle, and the like.

In step 1503, the prediction network may decode the second intermediate feature map to obtain the three-dimensional visual perception result corresponding to the image.

In the embodiments of this disclosure, the three-dimensional visual perception model may include three parts, which respectively are the first sub-network, the second sub-network, and the prediction network. The first sub-network may generate the first intermediate feature map based on the image, and the first intermediate feature map may be fused with the position encoding feature map to obtain the fusion feature map carrying the camera parameter information. The second sub-network may generate the second intermediate feature map based on the fusion feature map. The prediction network may generate the three-dimensional visual perception result base on the second intermediate feature map. In this way, through cooperation of the three parts, the camera parameter information can be effectively introduced into the calculation process of the three-dimensional visual perception model, without changing a model structure for the introduction of the camera parameter information. Therefore, cost of introducing the camera parameter information is very low, and the accuracy and the reliability of three-dimensional visual perception result can be well ensured.

In some optional examples, as shown in FIG. 9, step 120 includes steps 1205, 1207, and 1209.

Step 1205. Determine a proportional relationship between an output size supported by the first sub-network and an image size of the image.

Optionally, the output size supported by the first sub-network may refer to a size of the first intermediate feature map generated by the first sub-network. If the width and the height of the first intermediate feature map respectively are W2 and H2, and the width and the height of the image respectively are W1 and H1, the proportional relationship between the output size supported by the first sub-network and the image size of the image may be represented by using ratios of W2/W1 and H2/H1.

Step 1207. Perform pixel-sampling on the image in accordance with a sampling parameter adapted to the proportional relationship, to obtain a sampling result.

If it is assumed that the first sub-network includes the network layers a1 to a4 and the network layers b1 to b3 in FIG. 6, W2/W1 and H2/H1 are both 1/2, and the sampling parameter adapted to the proportional relationship may be 1/2. 1/2 may be used to indicate that one pixel in every two pixels is sampled. In this case, when pixel-sampling is performed on the image, sampling may be performed at every other pixel along both a width direction and a height direction. In this way, the sampling result may include H1/2 rows and W1/2 columns of pixels.

Step 1209. Determine, based on the camera parameter corresponding to the image, position information corresponding to each pixel in the sampling result within the camera coordinate system.

In step 1209, for each pixel in the sampling result, the position information corresponding to that pixel may be determined in the manner described above, so that the position encoding feature map is generated on this basis. Since the sampling result includes H1/2 rows and W1/2 columns of pixels, the width and the height of the generated position encoding feature map may be W1/2 and H1/2, respectively. Obviously, the width and the height of the position encoding feature map are consistent with those of the first intermediate feature map, thus facilitating the fusion of the position encoding feature map and the first intermediate feature map.

In some embodiments, the first sub-network may include the network layers a1 to a4 and the network layers b1 and b2 in FIG. 6. In this case, both W2/W1 and H2/H1 are not 1/2, but are 1/4, and correspondingly, the sampling parameter adapted to the proportional relationship is 1/4. In this case, when pixel-sampling is performed on the image, sampling may be performed every four pixels along both the width direction and the height direction. In this way, consistency in the sizes of the position encoding feature map and the first intermediate feature map can be ensured as possible, thereby facilitating the fusion of the two.

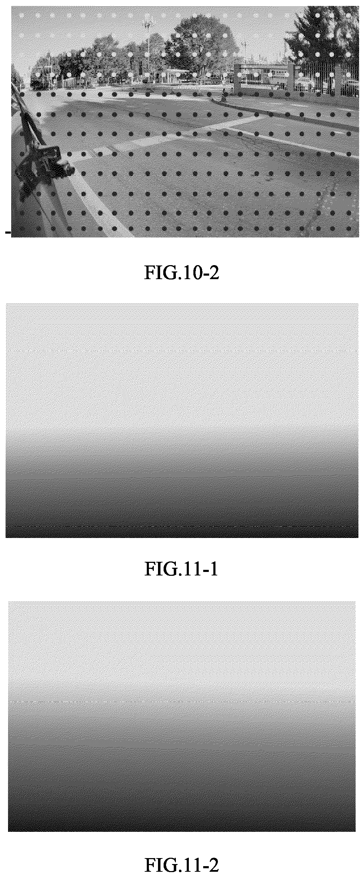

In some optional examples, if the first sub-network includes the network layers a1 to a4 and the network layers b1 to b3 in FIG. 6, after the image captured by the camera mounted on the movable device is obtained, the images captured by the camera can be sampled at equal intervals, with one pixel interval between each sampling, to obtain the sampling result. For each pixel in the sampling result, reference may be made to the foregoing relevant description in FIG. 4, to determine the target depth value corresponding to that pixel. Based on the target depth value corresponding to each pixel in the sampling result, a depth map may be generated. When the camera is of a certain model, for the sampling result, reference may be made to FIG. 10-1; and for a grayscale image corresponding to the depth map, reference may be made to FIG. 11-1. When the camera is of another certain model, for the sampling result, reference may be made to FIG. 10-2; and for a grayscale image corresponding to the depth map, reference may be made to FIG. 11-2.

The pixels in the sampling result may be undistorted based on the camera intrinsic parameter and then converted to a camera coordinate system with a normalized depth, and then, may be multiplied with the depth map to obtain the position encoding feature map representing the intrinsic and extrinsic parameter information of the camera at the pixel level with lower computational costs. The position encoding feature map may be represented by using position encoding map.

The position encoding map may be first convolved and transformed into a third intermediate feature map, which may be represented by using position embedding. Subsequently, the position embedding is overlaid with the first intermediate feature map obtained by using the first sub-network in the channel direction, and is further fused through a convolution operation. Afterwards, the fusion feature map with a size consistent with that of the first intermediate feature map is obtained by reducing the quantity of channels. The three-dimensional visual perception result may be obtained by decoding the fusion feature map by using the 3D heads.

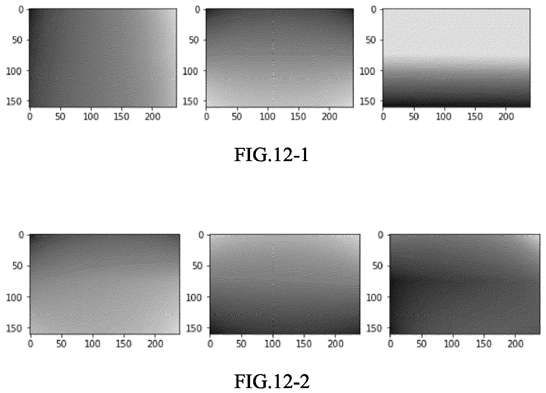

Optionally, quantities of channels of both the position encoding map and the position embedding may be 3. For grayscale images respectively corresponding to three channels of the position encoding map, reference may be made to FIG. 12-1; and for grayscale images respectively corresponding to three channels of the position embedding, reference may be made to FIG. 12-2.

In view of the above, by adopting the embodiments of this disclosure, the position encoding feature map representing the intrinsic and extrinsic parameter information of the camera at the pixel level can be obtained with lower computational costs; and through application of the position encoding feature map, the intrinsic and extrinsic parameter information of the camera can be introduced into the calculation process of the three-dimensional visual perception model, thereby better ensuring the accuracy and the reliability of the three-dimensional visual perception result.

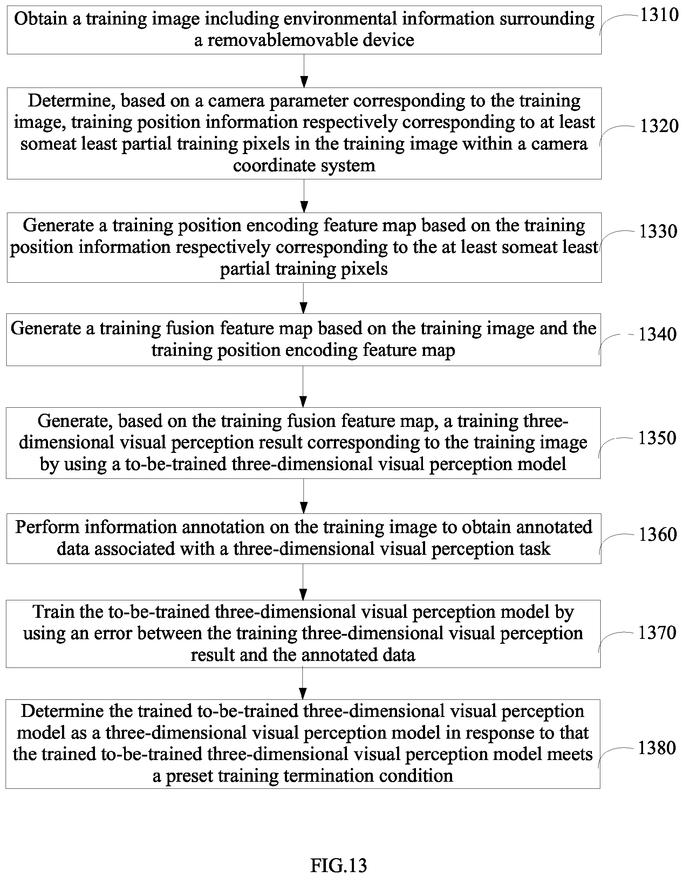

FIG. 13 is a schematic flowchart of a training method for a three-dimensional visual perception model according to some exemplary embodiments of this disclosure. The method shown in FIG. 13 may be implemented at a training stage. The method shown in FIG. 13 may include steps 1310, 1320, 1330, 1340, 1350, 1360, 1370, and 1380.

Step 1310. Obtain a training image including environmental information surrounding a movable device.

Step 1320. Determine, based on a camera parameter corresponding to the training image, training position information respectively corresponding to at least partial training pixels in the training image within a camera coordinate system.

Step 1330. Generate a training position encoding feature map based on the training position information respectively corresponding to the at least partial training pixels.

Step 1340. Generate a training fusion feature map based on the training image and the training position encoding feature map.

Step 1350. Generate, based on the training fusion feature map, a training three-dimensional visual perception result corresponding to the training image by using a to-be-trained three-dimensional visual perception model.

It should be noted that, for specific implementations of steps 1310 to 1350, reference may all be made to the relevant description in steps 110 to 150, and details are not described herein again.

Step 1360. Perform information annotation on the training image to obtain annotated data associated with a three-dimensional visual perception task.

Optionally, information annotation may be performed on the training image manually. For example, spatial positions, heading angles, lengths, widths, and the like of several objects in the training image are annotated, so that annotated data associated with the three-dimensional visual perception task may be obtained. The annotated data may be used as truth data during model training.

Step 1370. Train the to-be-trained three-dimensional visual perception model by using an error between the training three-dimensional visual perception result and the annotated data.

Optionally, a loss function may be used to calculate the error between the training three-dimensional visual perception result and the annotated data. The calculated error may be used as a model loss value of the to-be-trained three-dimensional visual perception model. The loss function may include, but is not limited to a mean absolute error loss function (L1 loss function) and a mean square error loss function (L2 loss function),etc..

In step 1370, with reference to the model loss value, gradient descent (such as stochastic gradient descent and steepest gradient descent) may be used to optimize parameters of the to-be-trained three-dimensional visual perception model, so as to train the to-be-trained three-dimensional visual perception model.

Step 1380. Determine the trained to-be-trained three-dimensional visual perception model as a three-dimensional visual perception model in response to that the trained to-be-trained three-dimensional visual perception model meets a preset training termination condition.

It should be noted that a large amount of sample data may be utilized during the training of the to-be-trained three-dimensional visual perception model, and each piece of the sample data includes a training image. In this way, for each piece of sample data, steps 1310 to 1370 may be implemented, and a process of implementing steps 1310 to 1370 for each piece of sample data may be considered as an iterative process.

After several iterations, if it is detected at a certain moment that the trained to-be-trained three-dimensional visual perception model converges, it may be determined that the trained to-be-trained three-dimensional visual perception model meets the preset training termination condition. In this case, the trained to-be-trained three-dimensional visual perception model may be directly determined as the three-dimensional visual perception model.

Certainly, the preset training termination condition is not limited hereto. For example, it is also possible to determine that the trained three-dimensional visual perception model meets the preset training termination condition when a quantity of iterations reaches a preset number.

In the embodiments of this disclosure, at the training stage, the training fusion feature map may be generated based on the training image including the environmental information surrounding the movable device and the camera parameter corresponding to the training image through a series of processing. Based on the training fusion feature map, the training three-dimensional visual perception result corresponding to the training image may be generated by using the to-be-trained three-dimensional visual perception model. The training three-dimensional visual perception result may be considered as prediction data of the to-be-trained three-dimensional visual perception model. In addition, the annotated data obtained by performing information annotation on the training image may be considered as truth data. The model loss value obtained by comparing the prediction data with the truth data may be used to evaluate prediction accuracy of the to-be-trained three-dimensional visual perception model. Based on the loss value of the model, the parameters of the to-be-trained three-dimensional visual perception model may be optimized through backpropagation, so as to obtain the three-dimensional visual perception model with good prediction accuracy. At the inference stage, when performing the three-dimensional visual perception task for the image captured by the camera, the camera parameter information of the camera can be introduced into the operation process of the three-dimensional visual perception model, thereby ensuring the accuracy and the reliability of the three-dimensional visual perception result. In this way, adopting the embodiments of this disclosure can better resolve the problems of poor model generalization and mixed training dropout in the related technologies.

The inventor finds through experiments that, according to the solutions in the relevant technologies, a model running speed (FPS) is 27.59, while according to the solutions in the embodiments of this disclosure, the FPS is 27.53. Obviously, by adopting the solutions in the embodiments of this disclosure, FPS can also be ensured while ensuring the accuracy and the reliability of the three-dimensional visual perception result. In other words, the introduction of the position encoding feature map results in very low computational overhead.

Exemplary apparatus

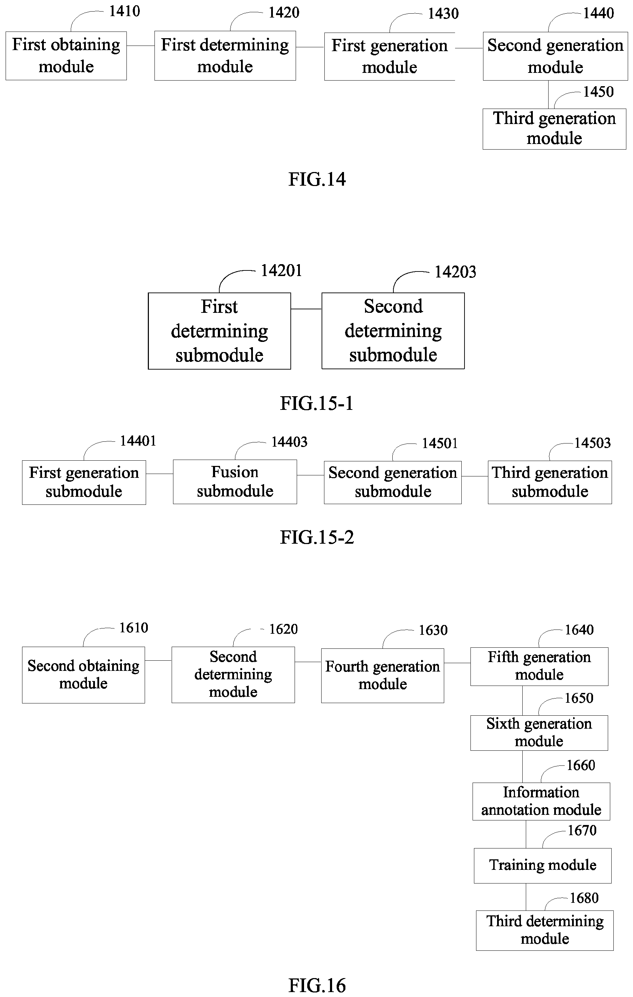

FIG. 14 is a schematic structural diagram of a three-dimensional visual perception apparatus according to some exemplary embodiments of this disclosure.

The apparatus shown in FIG. 14 includes:

a first obtaining module 1410, configured to obtain an image captured by a camera mounted on a movable device;
a first determining module 1420, configured to determine, based on a camera parameter corresponding to the image obtained by the first obtaining module 1410, position information respectively corresponding to at least partial pixels in the image obtained by the first obtaining module 1410 within a camera coordinate system;
a first generation module 1430, configured to generate a position encoding feature map based on the position information respectively corresponding to the at least partial pixels that is determined by the first determining module 1420;
a second generation module 1440, configured to generate a fusion feature map based on the image obtained by the first obtaining module 1410 and the position encoding feature map generated by the first generation module 1430; and
a third generation module 1450, configured to generate, based on the fusion feature map generated by the second generation module 1440, a three-dimensional visual perception result corresponding to the image obtained by the first obtaining module 1410 by using a three-dimensional visual perception model.

In some optional examples, as shown in FIG. 15-1, the first determining module 1420 includes:

a first determining submodule 14201, configured to determine target depth values respectively corresponding to the at least partial pixels in the image by using a camera intrinsic parameter and a camera extrinsic parameter in the camera parameter corresponding to the image obtained by the first obtaining module 1410 and a preset reference-plane height value within a preset coordinate system corresponding to the movable device; and
a second determining submodule 14203, configured to determine the position information respectively corresponding to the at least partial pixels within the camera coordinate system by using the camera intrinsic parameter and the target depth values respectively corresponding to the at least partial pixels that are determined by the first determining submodule 14201.

In some optional examples, the preset reference-plane height value includes a preset sky-plane height value and a preset ground-plane height.
The first determining submodule 14201 includes:

a first determining unit, configured to determine, for any target pixel in the at least partial pixels, a first reference depth value corresponding to the target pixel by using the camera intrinsic parameter and the camera extrinsic parameter with a constraint condition that in the preset coordinate system corresponding to the movable device, a height value of a spatial point corresponding to the target pixel is the preset sky-plane height value;

a second determining unit, configured to determine a second reference depth value corresponding to the target pixel by using the camera intrinsic parameter and the camera extrinsic parameter with a constraint condition that in the preset coordinate system, the height value of the spatial point corresponding to the target pixel is the preset ground-plane height value; and

a third determining unit, configured to determine the target depth value corresponding to the target pixel based on the smaller in the first reference depth value determined by the first determining unit and the second reference depth value determined by the second determining unit.

In some optional examples, as shown in FIG. 15-2,
the second generation module 1440 includes:

a first generation submodule 14401, configured to generate, based on the image obtained by the first obtaining module 1410, a first intermediate feature map by using a first sub-network in a feature extraction network in the three-dimensional visual perception model; and
a fusion submodule 14403, configured to fuse the first intermediate feature map generated by the first generation submodule 14401 with the position encoding feature map generated by the first generation module 1430, to obtain the fusion feature map.

The third generation module 1450 includes:

a second generation submodule 14501, configured to generate, based on the fusion feature map obtained by the fusion submodule 14403, a second intermediate feature map by using a second sub-network in the feature extraction network; and
a third generation submodule 14503, configured to generate, based on the second intermediate feature map generated by the second generation submodule 14501, the three-dimensional visual perception result corresponding to the image by using a prediction network in the three-dimensional visual perception model.

In some optional examples, the first determining module 1420 includes:

a third determining submodule, configured to determine a proportional relationship between an output size supported by the first sub-network and an image size of the image obtained by the first obtaining module 1410;
a sampling submodule, configured to perform pixel-sampling on the image in accordance with a sampling parameter adapted to the proportional relationship, to obtain a sampling result; and
a fourth determining submodule, configured to determine, based on the camera parameter corresponding to the image, position information corresponding to each pixel in the sampling result obtained by the sampling submodule within the camera coordinate system.

In some optional examples, the fusion submodule 14403 includes:

a conversion unit, configured to convert the position encoding feature map generated by the first generation module 1430 from an explicit representation to an implicit representation to obtain a third intermediate feature map;
an overlaying unit, configured to overlay the first intermediate feature map generated by the first generation submodule 14401 and the third intermediate feature map obtained by the conversion unit along a channel direction to obtain a fourth intermediate feature map;
an operation unit, configured to perform a convolution operation on the fourth intermediate feature map obtained by the overlaying unit to obtain a fifth intermediate feature map; and
a size adjustment unit, configured to perform a size adjustment on the fifth intermediate feature map obtained by the operation unit to obtain the fusion feature map with a size consistent with that of the first intermediate feature map.

In some examples, the position information corresponding to any target pixel in the at least partial pixels includes: a first coordinate value along an x-axis of the camera coordinate system, a second coordinate value along a y-axis of the camera coordinate system, and a third coordinate value along a z-axis of the camera coordinate system; and the first coordinate value, the second coordinate value, and the third coordinate value corresponding to the target pixel are stored at corresponding positions of different channels in the position encoding feature map.

FIG. 16 is a schematic structural diagram of a training apparatus for a three-dimensional visual perception model according to some exemplary embodiments of this disclosure. The apparatus shown in FIG. 16 includes:

a second obtaining module 1610, configured to obtain a training image including environmental information surrounding a movable device;
a second determining module 1620, configured to determine, based on a camera parameter corresponding to the training image obtained by the second obtaining module 1610, training position information respectively corresponding to at least partial training pixels in the training image within a camera coordinate system;

a fourth generation module 1630, configured to generate a training position encoding feature map based on the training position information respectively corresponding to the at least partial training pixels that is determined by the second determining module 1620;

a fifth generation module 1640, configured to generate a training fusion feature map based on the training image obtained by the second obtaining module 1610 and the training position encoding feature map generated by the fourth generation module 1630;

a sixth generation module 1650, configured to generate, based on the training fusion feature map generated by the fifth generation module 1640, a training three-dimensional visual perception result corresponding to the training image obtained by the second obtaining module 1610 by using a to-be-trained three-dimensional visual perception model;

an information annotation module 1660, configured to perform information annotation on the training image obtained by the second obtaining module 1610, to obtain annotated data associated with a three-dimensional visual perception task;

a training module 1670, configured to train the to-be-trained three-dimensional visual perception model by using an error between the training three-dimensional visual perception result generated by the sixth generation module 1650 and the annotated data obtained by the information annotation module 1660; and

a third determining module 1680, configured to determine the to-be-trained three-dimensional visual perception model trained by the training module 1670 as a three-dimensional visual perception model in response to that the to-be-trained three-dimensional visual perception model trained by the training module 1670 meets a preset training termination condition.

In the apparatus in this disclosure, various optional embodiments, optional implementations, and optional examples described above may be flexibly selected and combined according to requirements, so as to implement corresponding functions and effects. These are not enumerated in this disclosure.

Exemplary electronic device

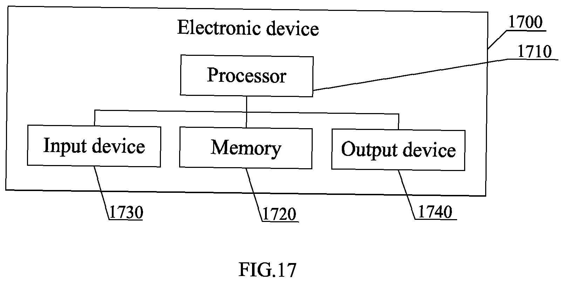

FIG. 17 is a block diagram of an electronic device according to an embodiment of this disclosure. An electronic device 1700 includes one or more processors 1710 and a memory 1720.

The processor 1710 may be a central processing unit (CPU) or another form of processing unit having a data processing capability and/or an instruction execution capability, and may control another component in the electronic device 1700 to implement a desired function.

The memory 1720 may include one or more computer program products. The computer program product may include various forms of computer readable storage media, such as a volatile memory and/or a nonvolatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1710 may execute one or more of the program instructions to implement the method according to various embodiments of this disclosure that are described above and/or other desired functions.

In an example, the electronic device 1700 may further include an input device 1730 and an output device 1740. These components are connected to each other through a bus system and/or another form of connection mechanism (not shown).

The input device 1730 may further include, for example, a keyboard and a mouse.

The output device 1740 may output various information to the outside, and may include, for example, a display, a speaker, a printer, a communication network, and a remote output device connected by the communication network.

Certainly, for simplicity, FIG. 17 shows only some of components in the electronic device 1700 that are related to this disclosure, and components such as a bus and an input/output interface are omitted. In addition, according to specific application situations, the electronic device 1700 may further include any other appropriate components.

Exemplary computer program product and computer readable storage medium

In addition to the foregoing method and device, the embodiments of this disclosure may also relate to a computer program product, which includes computer program instructions. When the instructions are run by a processor, the processor is enabled to perform the steps, of the method according to the embodiments of this disclosure, that are described in the "exemplary method" part of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "exemplary method" part of this specification.

The computer readable storage medium may be one readable medium or any combination of a plurality of readable media. The readable medium may be a readable signal medium or a readable storage medium. The readable storage medium may include, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A three-dimensional visual perception method, **characterized in that** the method comprises:

obtaining (110) an image captured by a camera mounted on a movable device;
determining (120), based on a camera parameter corresponding to the image, position information respectively corresponding to at least partial pixels in the image within a camera coordinate system;
generating (130) a position encoding feature map based on the position information respectively corresponding to the at least partial pixels;
generating (140) a fusion feature map based on the image and the position encoding feature map; and
generating (150), based on the fusion feature map, a three-dimensional visual perception result corresponding to the image by using a three-dimensional visual perception model.

2. The method according to claim 1, wherein the determining, based on a camera parameter corresponding to the image, position information respectively corresponding to at least partial pixels in the image within a camera coordinate system comprises:

determining (1201) target depth values respectively corresponding to the at least partial pixels in the image by using a camera intrinsic parameter and a camera extrinsic parameter corresponding to the image and a preset reference-plane height value in a preset coordinate system corresponding to the movable device; and
determining (1203) the position information respectively corresponding to the at least partial pixels within the camera coordinate system by using the camera intrinsic parameter and the target depth values respectively corresponding to the at least partial pixels.

3. The method according to claim 2, wherein the preset reference-plane height value comprises a preset sky-plane height value and a preset ground-plane height value; and
the determining target depth values respectively corresponding to the at least partial pixels in the image by using a camera intrinsic parameter and a camera extrinsic parameter corresponding to the image and a preset reference-plane height value in a preset coordinate system corresponding to the movable device comprises:

for any target pixel in the at least partial pixels, determining (12011) a first reference depth value corresponding to the target pixel by using the camera intrinsic parameter and the camera extrinsic parameter with a constraint condition that in the preset coordinate system corresponding to the movable device, a height value of a spatial point corresponding to the target pixel is the preset sky-plane height value;

determining (12013) a second reference depth value corresponding to the target pixel by using the camera intrinsic parameter and the camera extrinsic parameter with a constraint condition that in the preset coordinate system, the height value of the spatial point corresponding to the target pixel is the preset ground-plane height value; and

determining (12015) the target depth value corresponding to the target pixel based on the smaller of the first reference depth value and the second reference depth value.

4. The method according to claim 1, wherein the generating a fusion feature map based on the image and the position encoding feature map comprises:

generating (1401), based on the image, a first intermediate feature map by using a first sub-network in a feature extraction network in the three-dimensional visual perception model;

fusing (1403) the first intermediate feature map with the position encoding feature map to obtain the fusion feature map; and

the generating, based on the fusion feature map, a three-dimensional visual perception result corresponding to the image by using a three-dimensional visual perception model comprises:

generating (1501), based on the fusion feature map, a second intermediate feature map by using a second sub-network in the feature extraction network; and

generating (1503), based on the second intermediate feature map, the three-dimensional visual perception result corresponding to the image by using a prediction network in the three-dimensional visual perception model.

5. The method according to claim 4, wherein the determining, based on a camera parameter corresponding to the image, position information respectively corresponding to at least partial pixels in the image within a camera coordinate system comprises:

determining (1205) a proportional relationship between an output size supported by the first sub-network and an image size of the image;

performing (1207) pixel-sampling on the image in accordance with a sampling parameter adapted to the proportional relationship, to obtain a sampling result; and

determining (1209), based on the camera parameter corresponding to the image, position information corresponding to each pixel in the sampling result within the camera coordinate system.

6. The method according to claim 4, wherein the fusing the first intermediate feature map with the position encoding feature map to obtain the fusion feature map comprises:

converting (14031) the position encoding feature map from an explicit representation to an implicit representation to obtain a third intermediate feature map;

overlaying (14033) the first intermediate feature map and the third intermediate feature map along a channel direction to obtain a fourth intermediate feature map;

performing (14035) a convolution operation on the fourth intermediate feature map to obtain a fifth intermediate feature map; and

performing (14037) a size adjustment on the fifth intermediate feature map to obtain the fusion feature map with a size consistent with that of the first intermediate feature map.

7. The method according to any one of claims 1 to 6, the position information corresponding to any target pixel in the at least partial pixels comprises: a first coordinate value along an x-axis of the camera coordinate system, a second coordinate value along a y-axis of the camera coordinate system, and a third coordinate value along a z-axis of the camera coordinate system; and the first coordinate value, the second coordinate value, and the third coordinate value corresponding to the target pixel are stored at corresponding positions of different channels in the position encoding feature map.

8. A training method for a three-dimensional visual perception model, **characterized in that** the training method comprises:

obtaining (1310) a training image comprising environmental information surrounding a movable device;

determining (1320), based on a camera parameter corresponding to the training image, training position information respectively corresponding to at least partial training pixels in the training image within a camera coordinate system;

generating (1330) a training position encoding feature map based on the training position information respectively corresponding to the at least partial training pixels;

generating (1340) a training fusion feature map based on the training image and the training position encoding feature map;

generating (1350), based on the training fusion feature map, a training three-dimensional visual perception result corresponding to the training image by using a to-be-trained three-dimensional visual perception model;

performing (1360) information annotation on the training image to obtain annotated data associated with a three-dimensional visual perception task;

training (1370) the to-be-trained three-dimensional visual perception model by using an error between the training three-dimensional visual perception result and the annotated data; and

determining (1380) the trained to-be-trained three-dimensional visual perception model as a three-dimensional visual perception model in response to that the trained to-be-trained three-dimensional visual perception model meets a preset training termination condition.

9. A three-dimensional visual perception apparatus, **characterized in that** the three-dimensional visual perception apparatus comprises:

a first obtaining module (1410), configured to obtain an image captured by a camera mounted on a movable device;

a first determining module (1420), configured to determine, based on a camera parameter corresponding to the image obtained by the first obtaining module, position information respectively corresponding to at least partial pixels in the image obtained by the first obtaining module within a camera coordinate system;

a first generation module (1430), configured to generate a position encoding feature map based on the position information respectively corresponding to the at least partial pixels that is determined by the first determining module;

a second generation module (1440), configured to generate a fusion feature map based on the image obtained by the first obtaining module and the position encoding feature map generated by the first generation module; and

a third generation module (1450), configured to generate, based on the fusion feature map generated by the second generation module, a three-dimensional visual perception result corresponding to the image obtained by the first obtaining module by using a three-dimensional visual perception model.

10. The three-dimensional visual perception apparatus according to claim 9, wherein the first determining module 1420 includes:

a first determining submodule (14201), configured to determine target depth values respectively corresponding to the at least partial pixels in the image by using a camera intrinsic parameter and a camera extrinsic parameter in the camera parameter corresponding to the image obtained by the first obtaining module (1410) and a preset reference-plane height value within a preset coordinate system corresponding to the movable device; and

a second determining submodule (14203), configured to determine the position information respectively corresponding to the at least partial pixels within the camera coordinate system by using the camera intrinsic parameter and the target depth values respectively corresponding to the at least partial pixels that are determined by the first determining submodule (14201).

11. The three-dimensional visual perception apparatus according to claim 9, wherein the second generation module (1440) includes:

a first generation submodule (14401), configured to generate, based on the image obtained by the first obtaining module (1410), a first intermediate feature map by using a first sub-network in a feature extraction network in the three-dimensional visual perception model; and

a fusion submodule (14403), configured to fuse the first intermediate feature map generated by the first generation submodule (14401 with the position encoding feature map generated by the first generation module (1430), to obtain the fusion feature map.

12. The three-dimensional visual perception apparatus according to claim 9, wherein the third generation module (1450) includes:

a second generation submodule (14501), configured to generate, based on the fusion feature map obtained by the fusion submodule (14403), a second intermediate feature map by using a second sub-network in the feature extraction network; and

a third generation submodule (14503), configured to generate, based on the second intermediate feature map generated by the second generation submodule (14501), the three-dimensional visual perception result corresponding to the image by using a prediction network in the three-dimensional visual perception model.

13. A training apparatus for a three-dimensional visual perception model, **characterized in that** the training apparatus for a three-dimensional visual perception model comprises:

a second obtaining module (1610), configured to obtain a training image comprising environmental information surrounding a movable device;

a second determining module (1620), configured to determine, based on a camera parameter corresponding to the training image obtained by the second obtaining module, training position information respectively corresponding to at least partial training pixels in the training image within a camera coordinate system;

a fourth generation module (1630), configured to generate a training position encoding feature map based on the training position information respectively corresponding to the at least partial training pixels that is determined by the second determining module;

a fifth generation module (1640), configured to generate a training fusion feature map based on the training image obtained by the second obtaining module and the training position encoding feature map generated by the fourth generation module;

a sixth generation module (1650), configured to generate, based on the training fusion feature map generated by the fifth generation module, a training three-dimensional visual perception result corresponding to the training image obtained by the second obtaining module by using a to-be-trained three-dimensional visual perception model;

an information annotation module (1660), configured to perform information annotation on the training image obtained by the second obtaining module, to obtain annotated data associated with a three-dimensional visual perception task;

a training module (1670), configured to train the to-be-trained three-dimensional visual perception model by using an error between the training three-dimensional visual perception result generated by the sixth generation module and the annotated data obtained by the information annotation module; and

a third determining module (1680), configured to determine the to-be-trained three-dimensional visual perception model trained by the training module as a three-dimensional visual perception model in response to that the to-be-trained three-dimensional visual perception model trained by the training module meets a preset training termination condition.

14. A computer readable storage medium, **characterized in that** the storage medium stores a computer program, which, when executed by a processor, is used for implementing the three-dimensional visual perception method according to any one of claims 1 to 7, or implementing the training method for a three-dimensional visual perception model according to claim 8.

15. An electronic device (1700), **characterized in that** the electronic device comprises:

a processor (1710); and
a memory (1720), configured to store a processor-executable instruction, wherein
the processor is configured to read the executable instruction from the memory, and execute the instruction to implement the three-dimensional visual perception method according to any one of claims 1 to 7, or implement the training method for a three-dimensional visual perception model according to claim 8.

Obtain an image captured by a camera disposedmounted on a removablemovable device ⌐~110

↓

Determine, based on a camera parameter corresponding to the image, position information respectively corresponding to at least someat least partial pixels in the image within a camera coordinate system ⌐~120

↓

Generate a position encoding feature map based on the position information respectively corresponding to the at least someat least partial pixels ⌐~130

↓

Generate a fusion feature map based on the image and the position encoding feature map ⌐~140

↓

Generate, based on the fusion feature map, a three-dimensional visual perception result corresponding to the image by using a three-dimensional visual perception model ⌐~150

## FIG.1

Determine target depth values respectively corresponding to at least someat least partial pixels in an image by using a camera intrinsic parameter and a camera extrinsic parameter in a camera parameter corresponding to the image and a preset reference-plane height value in a preset coordinate system corresponding to a removablemovable device ⌐~1201

↓

Determine position information respectively corresponding to the at least someat least partial pixels within a camera coordinate system by using the camera intrinsic parameter and the target depth values respectively corresponding to the at least someat least partial pixels ⌐~1203

## FIG.2

For any target pixel in at least someat least partial pixels, determine a first reference depth value corresponding to the target pixel by using a camera intrinsic parameter and a camera extrinsic parameter with a constraint condition that in a preset coordinate system corresponding to a removablemovable device, a height value of a spatial point corresponding to the target pixel is a preset sky-plane height value ⌐ 12011

Determine a second reference depth value corresponding to the target pixel by using the camera intrinsic parameter and the camera extrinsic parameter with a constraint condition that in the preset coordinate system, the height value of the spatial point corresponding to the target pixel is a preset ground-plane height value ⌐ 12013

Determine the target depth value corresponding to the target pixel based on a reference depth value with athe smaller numerical value in the first reference depth value and the second reference depth value ⌐ 12015

FIG.3

Sky plane

Imaging plane

Ground plane

FIG.4

Generate, based on an image, a first intermediate feature map by using a first subnetworksub-network in a feature extraction network in a three-dimensional visual perception model — 1401

Fuse the first intermediate feature map with a position encoding feature map to obtain a fusion feature map — 1403

**FIG.5**

Feature extraction network

Network layer a4 → Network layer b1
Network layer a3 → Network layer b2
→ Network layer b3
Network layer a2
Network layer a1 → Network layer b4

position encoding map → position embedding → Fuse

3D heads
dimension head
depth head
location offset head
2d wh head
rotation head
heatmap head

**FIG.6**

Convert a position encoding feature map from an explicit representation to an implicit representation to obtain a third intermediate feature map — 14031

Overlay a first intermediate feature map and the third intermediate feature map along a channel direction to obtain a fourth intermediate feature map — 14033

Perform a convolution operation on the fourth intermediate feature map to obtain a fifth intermediate feature map — 14035

Perform a size adjustment on the fifth intermediate feature map to obtain a fusion feature map with a size consistent with that of the first intermediate feature map — 14037

**FIG.7**

Generate, based on a fusion feature map, a second intermediate feature map by using a second subnetworksub-network in a feature extraction network ⌐ 1501

↓

Generate, based on the second intermediate feature map, a three-dimensional visual perception result corresponding to an image by using a prediction network in a three-dimensional visual perception model ⌐ 1503

FIG.8

Determine a proportional relationship between an output size supported by a first subnetworksub-network and an image size of an image ⌐ 1205

↓

Perform pixel-sampling on the image in accordance with a sampling parameter adapted to the proportional relationship, to obtain a sampling result ⌐ 1207

↓

Determine, based on the camera parameter corresponding to the image, position information corresponding to each pixel in the sampling result within a camera coordinate system ⌐ 1209

FIG.9

FIG.10-1

FIG.10-2

FIG.11-1

FIG.11-2

FIG.12-1

FIG.12-2

Obtain a training image including environmental information surrounding a removablemovable device ⌐ 1310

↓

Determine, based on a camera parameter corresponding to the training image, training position information respectively corresponding to at least someat least partial training pixels in the training image within a camera coordinate system ⌐ 1320

↓

Generate a training position encoding feature map based on the training position information respectively corresponding to the at least someat least partial training pixels ⌐ 1330

↓

Generate a training fusion feature map based on the training image and the training position encoding feature map ⌐ 1340

↓

Generate, based on the training fusion feature map, a training three-dimensional visual perception result corresponding to the training image by using a to-be-trained three-dimensional visual perception model ⌐ 1350

↓

Perform information annotation on the training image to obtain annotated data associated with a three-dimensional visual perception task ⌐ 1360

↓

Train the to-be-trained three-dimensional visual perception model by using an error between the training three-dimensional visual perception result and the annotated data ⌐ 1370

↓

Determine the trained to-be-trained three-dimensional visual perception model as a three-dimensional visual perception model in response to that the trained to-be-trained three-dimensional visual perception model meets a preset training termination condition ⌐ 1380

FIG.13

First obtaining module — 1410

First determining module — 1420

First generation module — 1430

Second generation module — 1440

Third generation module — 1450

**FIG.14**

First determining submodule — 14201

Second determining submodule — 14203

**FIG.15-1**

First generation submodule — 14401

Fusion submodule — 14403

Second generation submodule — 14501

Third generation submodule — 14503

**FIG.15-2**

Second obtaining module — 1610

Second determining module — 1620

Fourth generation module — 1630

Fifth generation module — 1640

Sixth generation module — 1650

Information annotation module — 1660

Training module — 1670

Third determining module — 1680

**FIG.16**

FIG.17

Europäisches
Patentamt

European
Patent Office

Office européen
des brevets

# EUROPEAN SEARCH REPORT

Application Number

EP 24 20 6829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MASOUMIAN ARMIN ET AL: "GCNDepth: Self-supervised monocular depth estimation based on graph convolutional network", NEUROCOMPUTING, [Online] vol. 517, 14 January 2023 (2023-01-14), pages 81-92, XP093250219, DOI: 10.1016/j.neucom.2022.10.073 Retrieved from the Internet: URL:https://doi.org/10.1016/j.neucom.2022.10.073> [retrieved on 2025-02-13] * abstract * * page 81, column 2, line 13 - page 82, column 1, line 1 * * page 82, column 1, line 47 - line 48 * * page 85, column 2, line 18 - line 30 * * page 87, column 1, line 18 - line 32 * * figures 2-3 * | 1-15 | INV. G06V10/80 G06V10/82 G06V20/56 G06V20/64 |
| A | ANDREAS GEIGER ET AL: "Are we ready for autonomous driving? The KITTI vision benchmark suite", COMPUTER VISION AND PATTERN RECOGNITION (CVPR), 2012 IEEE CONFERENCE ON, IEEE, 16 June 2012 (2012-06-16), pages 3354-3361, XP032208999, DOI: 10.1109/CVPR.2012.6248074 ISBN: 978-1-4673-1226-4 * abstract * * page 3355, column 2, line 12 - line 14 * * figure 1 * | 1-15 | TECHNICAL FIELDS SEARCHED (IPC) G06V |

-/--

The present search report has been drawn up for all claims

| Place of search | Date of completion of the search | Examiner |
|---|---|---|
| The Hague | 17 February 2025 | De Coi, Juri |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

<table>
<tr><td colspan="2">Europäisches Patentamt<br/>European Patent Office<br/>Office européen des brevets</td><td>**EUROPEAN SEARCH REPORT**</td><td>Application Number<br/>EP 24 20 6829</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "Depth map", Wikipedia, 8 December 2022 (2022-12-08), pages 1-2, XP093250476, Retrieved from the Internet: URL:https://en.wikipedia.org/w/index.php?title=Depth_map&oldid=1126258200 [retrieved on 2025-02-14] * page 1, line 2 - line 4 * - - - - - | 1-15 | |
| A | MASOUMIAN ARMIN ET AL: "Monocular Depth Estimation Using Deep Learning: A Review", SENSORS, [Online] vol. 22, no. 14, 18 July 2022 (2022-07-18), page 5353, XP093249825, CH ISSN: 1424-8220, DOI: 10.3390/s22145353 Retrieved from the Internet: URL:https://doi.org/10.3390/s22145353> [retrieved on 2025-02-13] * the whole document * - - - - - | 1-15 | TECHNICAL FIELDS SEARCHED (IPC) |

The present search report has been drawn up for all claims

| Place of search | Date of completion of the search | Examiner |
|---|---|---|
| The Hague | 17 February 2025 | De Coi, Juri |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2